(19) **Europäisches Patentamt**
**European Patent Office**
**Office européen des brevets**

(11) **EP 2 225 823 B1**

(12) **FASCICULE DE BREVET EUROPEEN**

(45) Date de publication et mention
de la délivrance du brevet:
**16.05.2012 Bulletin 2012/20**

(51) Int Cl.:
*H02M 3/07* (2006.01)     *H02M 3/44* (2006.01)
*H01G 5/16* (2006.01)

(21) Numéro de dépôt: **08866402.4**

(22) Date de dépôt: **22.12.2008**

(86) Numéro de dépôt international:
**PCT/EP2008/068179**

(87) Numéro de publication internationale:
**WO 2009/083541 (09.07.2009 Gazette 2009/28)**

(54) **CONVERTISSEUR ELECTRIQUE A CAPACITE VARIABLE**

ELEKTRISCHER WANDLER MIT VERÄNDERBARER KAPAZITÄT

VARIABLE-CAPACITANCE ELECTRICAL CONVERTER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **20.12.2007 FR 0760087**

(43) Date de publication de la demande:
**08.09.2010 Bulletin 2010/36**

(73) Titulaire: **Commissariat à l'Énergie Atomique et aux Énergies Alternatives**
**75015 Paris (FR)**

(72) Inventeur: **DESPESSE, Ghislain**
**F-38120 Saint Egreve (FR)**

(74) Mandataire: **Ilgart, Jean-Christophe et al**
**BREVALEX**
**95 rue d'Amsterdam**
**75378 Paris Cedex 8 (FR)**

(56) Documents cités:
**US-A- 6 058 027     US-B1- 6 317 342**

• **LI L ET AL: "Single-input, dual-output MEMS DC/DC converter" ELECTRONICS LETTERS, IEE STEVENAGE, GB, vol. 43, no. 15, 19 juillet 2007 (2007-07-19), pages 809-810, XP006029380 ISSN: 0013-5194**
• **NOWOROLSKI J M ET AL: "An electrostatic microresonant power conversion device" PROCEEDINGS OF THE ANNUAL POWER ELECTRONICS SPECIALISTS CONFERENCE (PESC). TOLEDO, JUNE 29 - JULY 3, 1992; [PROCEEDINGS OF THE ANNUAL POWER ELECTRONICS SPECIALISTS CONFERENCE (PESC)], NEW YORK, IEEE, US, vol. CONF. 23, 29 juin 1992 (1992-06-29), pages 997-1002, XP010064810 ISBN: 978-0-7803-0695-0**

**Description**

**DOMAINE TECHNIQUE ET ART ANTÉRIEUR**

La présente invention se rapporte à un convertisseur électrique de taille réduite destiné à convertir une énergie électrique fournie par une source sous un premier potentiel en une énergie électrique sous un autre potentiel exploitable par un système électrique.

De manière générale, une énergie électrique fournie par une alimentation est, par exemple à une tension de 220 V, or de nombreux appareils, notamment les appareils portables, requièrent une tension de fonctionnement plus faible, par exemple de 12V ou 14V. Ceci nécessite donc de recourir à un convertisseur d'énergie électrique également appelé transformateur électrique, ce système est généralement du type inductif.

Un convertisseur électrique fonctionne selon le principe suivant : une énergie électrique provenant d'une source quelconque à un potentiel ou à un courant donné est stockée sous une autre forme, puis est restituée sous forme électrique à un potentiel ou à un courant souhaité.

De manière connue, le stockage de l'énergie électrique des structures de conversion électrique/électrique se fait sous forme magnétique (inductance, transformateur). Or ces structures de conversion à base d'éléments électromagnétiques requièrent une taille suffisante pour pouvoir offrir de bonnes performances électriques. En effet, si on réduit les dimensions d'un système électromagnétique, du type inductance, les pertes résistives du bobinage deviennent très importantes par rapport à l'énergie stockable dans l'élément magnétique ; le rendement est donc très faible, ce qui rend leur utilisation très peu intéressante dans les systèmes fortement miniaturisés, par exemple dans les systèmes intégrés sur silicium, à moins d'accepter des rendements extrêmement faibles.

Par ailleurs, ces structures nécessitent la circulation de courant, ce qui provoque en outre une dissipation de l'énergie dans des fils de faibles sections et un échauffement.

Le document US 6 317 342 décrit un convertisseur de tension utilisant un condensateur a capacité variable. Ce convertisseur génère d'importantes pertes d'énergie. En outre il fonctionne nécessairement à la résonance, ce qui implique de prévoir une horloge extérieure pour effectuer le transfert de charge.

C'est par conséquent un but de la présente invention d'offrir un système de conversion d'énergie électrique peu encombrant et offrant des bonnes performances.

**EXPOSÉ DE L'INVENTION**

Le but précédemment énoncé est atteint par un système dans lequel le stockage s'effectue sous forme mécanique et ceci en utilisant une structure électrostatique mettant en oeuvre au moins un condensateur à entrefer variable, des efforts électrostatiques apparaissant entre les armatures du condensateur et permettant d'assure la conversion. Une étape de fonctionnement à charge constante permet de réduire les pertes du système et de le rendre plus performant que les systèmes de l'état de la technique.

La conversion passe donc par l'intermédiaire d'un mouvement mécanique uniquement créé par des forces électrostatiques.

Le stockage se fait sous la forme d'une énergie mécanique, par exemple une énergie cinétique et/ou potentielle, l'énergie potentielle peut être une énergie de déformation mécanique, telle que par la compression d'un ressort ou la flexion d'une poutre.

Le système selon l'invention peut comporter au moins un condensateur à capacité variable, muni d'une armature mobile, le condensateur est capable de convertir l'énergie électrique à une tension donnée en une énergie mécanique en déplaçant l'armature mobile, par exemple en déformant un ressort, l'énergie mécanique est donc stockée dans le ressort, puis cette énergie mécanique est convertie en énergie électrique à une autre tension par un nouveau déplacement de l'armature mobile. La structure électrostatique est alors utilisée séquentiellement en mode actionneur et en mode convertisseur d'énergie électrique.

Dans un autre mode de réalisation, le système peut comporter deux condensateurs, l'un ayant plus particulièrement pour fonction de déplacer l'armature mobile et l'autre servant plus particulièrement à la modification de la tension.

Le système selon l'invention peut fonctionner en abaisseur ou en releveur de tension.

Grâce à l'invention, il est possible d'offrir des convertisseurs de très petites dimensions. En effet, contrairement à la conversion électromagnétique, dans le cas de la conversion électrostatique, plus les dimensions sont réduites, plus la capacité volumique des structures peut être élevée et donc plus l'énergie convertible par unité de volume est importante. Il y a en effet une augmentation de la quantité de surface avec une plus grande structuration de la matière et une diminution des entrefers.

Par ailleurs, dans un système électrostatique, les efforts mécaniques sont créés par des tensions/champs électriques pour stocker l'énergie et non des courants électriques, il n'y a pas de dissipation d'énergie par circulation d'un courant dans des fils de faibles sections, ni échauffement.

En outre, dans le cas de système de très petites dimensions, il est possible d'utiliser des matériaux monocristallins tels que le silicium, le système de conversion offre alors un très faible amortissement mécanique, on parle alors de facteurs de qualité mécanique très élevés, assurant des pertes mécaniques extrêmement réduites.

Il est alors possible de réaliser des systèmes intégrés de très petites dimensions, et adaptés à l'utilisation dans des dispositifs électroniques portables.

On peut prévoir de coupler plusieurs systèmes pour effectuer une conversion en une énergie électrique sous plusieurs valeurs de tensions.

De manière particulièrement avantageuse, le système de conversion fonctionne selon deux modes distincts :

- un premier mode lors duquel le potentiel des charges électriques évolue progressivement sans qu'il n'y ait aucun courant qui circule,
- un deuxième mode lors duquel des charges électriques circulent sans qu'il n'y ait aucune différence de potentiel.

Le fonctionnement du système selon ces deux modes de manière consécutive permet de ne pas avoir de pertes dans le transfert de charge. En effet, dans ces deux modes, la puissance dissipée dans le système de conversion, qui est égale au produit du courant par la différence de tension, est toujours nulle car, dans chacun des deux modes, une des composantes est toujours nulle. Le système selon l'invention offre alors des pertes énergétiques réduites lors de la conversion.

Il existe également des systèmes dits « à capacités commutées » dont le principe de fonctionnement consiste à transférer de l'énergie à l'aide d'au moins deux condensateurs de structure mécanique fixe, en commutant successivement leur connexion en parallèle et en série.

Cependant, le transfert d'énergie n'est obtenu que s'il existe une différence de tension entre la source et les condensateurs juste avant leur connexion à la source. De ce fait, à la fermeture de l'interrupteur, il y a une perte d'énergie par dissipation à cause de la différence de tension.

La présente invention a alors principalement pour objet un procédé de conversion d'une première énergie électrique sous une première tension vers une deuxième énergie électrique sous une deuxième tension par un système de conversion comportant au moins une source de tension à la première tension reliée à un condensateur à capacité variable par l'intermédiaire d'un interrupteur de charge, un interrupteur de décharge étant placé en parallèle avec le condensateur à capacité variable, un moyen de collecte de l'énergie sous la deuxième tension, et des moyens de transfert d'énergie entre le condensateur à capacité variable et le moyen de collecte, le condensateur à capacité variable comportant une plaque fixe et une plaque mobile apte à s'écarter et à se rapprocher de la plaque fixe et des moyens élastiques de rappel de la plaque mobile vers sa position initiale, le procédé comprenant, pour un cycle de conversion, les étapes suivantes:

a) fermer l'interrupteur de charge, l'interrupteur de décharge étant ouvert, pour charger le condensateur à capacité variable à la première tension, et induire un déplacement de la plaque mobile avec augmentation de la capacité du condensateur,

b) ouvrir l'interrupteur de charge et maintenir ouvert l'interrupteur de décharge pour permettre un fonctionnement à charge constante du condensateur, la capacité du condensateur continuant d'augmenter,

c) fermer l'interrupteur de décharge pour permettre une décharge au moins partielle du condensateur à capacité variable et produire une inversion du mouvement de l'élément mobile,

les moyens de transfert assurant un transfert d'énergie du condensateur vers les moyens de collecte lors du mouvement de l'électrode mobile.

La présente invention a également pour objet un système de conversion d'une première énergie électrique sous une première tension vers une deuxième énergie électrique sous une deuxième tension comportant au moins une source de tension à la première tension reliée à un condensateur à capacité variable par l'intermédiaire d'un interrupteur de charge, un interrupteur de décharge étant placé en parallèle avec le condensateur à capacité variable, un moyen de collecte de l'énergie sous la deuxième tension, et des moyens de transfert d'énergie (entre le condensateur à capacité variable et le moyen de collecte, le condensateur à capacité variable comportant une plaque fixe, une plaque mobile apte à s'écarter et à se rapprocher de la plaque fixe et des moyens élastiques de rappel de la plaque mobile vers sa position initiale,

ledit système de conversion comportant également des moyens de commande des interrupteurs de charge et de décharge de sorte que pour un cycle de conversion :

a) lors d'une première étape, l'interrupteur de décharge est ouvert et l'interrupteur de charge est fermé assurant la charge du condensateur à la première tension, et un déplacement de la plaque mobile avec augmentation de la capacité du condensateur,

b) lors d'une deuxième étape, l'interrupteur de charge est ouvert et l'interrupteur de décharge est maintenu ouvert permettant un fonctionnement à charge constante du condensateur, la capacité du condensateur continuant d'augmenter,

c) lors d'une troisième étape l'interrupteur de décharge est fermé permettant une décharge au moins partielle du condensateur à capacité variable conduisant à une inversion du mouvement de l'élément mobile.

les moyens de transfert assurant un transfert d'énergie du condensateur vers les moyens de collecte lors du mouvement de l'électrode mobile.

De manière avantageuse, la commande des interrupteurs est telle que la fermeture de l'interrupteur de charge a lieu lorsque la capacité du condensateur est minimale.

La commande des interrupteurs est avantageusement telle que la fermeture de l'interrupteur de décharge a lieu lorsque la capacité du condensateur est maximale.

L'une des électrodes du condensateur est par exemple reliée au moyen de collecte par l'intermédiaire d'un interrupteur ou d'une diode de transfert. L'interrupteur ou la diode de transfert sont, par exemple passants lors d'une phase du mouvement de l'électrode mobile du condensateur à capacité variable correspondant à une diminution de sa capacité.

Dans un mode de réalisation, le condensateur à capacité variable constitue un premier condensateur le système comportant en outre un deuxième condensateur à capacité variable comportant au moins une plaque fixe et une plaque mobile apte à s'écarter ou à s'éloigner de la plaque fixe, les plaques mobiles des premier et deuxième condensateurs étant solidaires en mouvement, le deuxième condensateur à capacité variable étant relié au moyen de collecte par l'intermédiaire d'un interrupteur ou d'une diode de transfert. Le deuxième condensateur comporte avantageusement deux plaques fixes disposées de part et d'autre de la plaque mobile.

Dans un autre mode de réalisation, chaque condensateur comporte une plaque fixe disposée chacune d'un côté d'une plaque mobile commune.

Avantageusement, la première plaque fixe du premier condensateur offre une surface en regard de la plaque mobile supérieure à celle de la deuxième plaque fixe du deuxième condensateur.

La durée de fermeture de l'interrupteur de décharge est avantageusement inférieure à un centième de la durée du cycle de conversion.

Par exemple, l'interrupteur de décharge est formé d'éléments portés par la plaque fixe et la plaque mobile dudit condensateur à capacité variable, la décharge ayant lieu par mise en contact des éléments portés par les plaques.

On peut prévoir que les interrupteurs soient des interrupteurs commandables en fonction du temps, de la valeur de la position d'une plaque mobile, de la valeur de capacité de l'un des condensateurs, de la tension aux bornes d'un condensateur ou de la dérivée de la tension aux bornes d'un condensateur.

Le système peut être un système intégré réalisé en silicium.

Les moyens de rappel sont par exemple choisis parmi les ressorts, les lames et les poutres déformables.

La présente invention a également pour objet un ensemble de conversion d'énergie électrique comportant au moins deux systèmes de conversion selon la présente invention, ledit ensemble étant apte à convertir la première énergie à la première tension en plusieurs deuxièmes énergies à plusieurs deuxièmes tensions ; les systèmes peuvent avoir une électrode mobile commune.

La présente invention a également pour objet un dispositif électronique comportant au moins un système de conversion d'énergie électrique selon la présente invention ou un ensemble de conversion selon la présente invention.

**BRÈVE DESCRIPTION DES DESSINS**

La présente invention sera mieux comprise à l'aide de la description qui va suivre et des dessins en annexe, sur lesquels :

- la figure 1 est une représentation schématique d'un premier mode de réalisation d'un système de conversion selon l'invention,
- les figures 2A à 2D sont des représentations graphiques de différentes caractéristiques du système de la figure 1,
- la figure 3 est un chronogramme indiquant les différents états des interrupteurs de la figure 1,
- la figure 4 est une représentation schématique d'un deuxième mode de réalisation d'un système de conversion selon l'invention,
- les figures 5A à 5D sont des représentations graphiques de différentes caractéristiques du système de la figure 4,
- la figure 6 est un chronogramme indiquant les différents états des interrupteurs de la figure 4,
- la figure 7 est une représentation schématique d'un troisième mode de réalisation d'un système de conversion selon l'invention, le système comportant un seul condensateur à capacité variable,
- les figures 7A à 7c sont des représentations graphiques de différentes caractéristiques du système de la figure 7, la figure 7D représentant un chronogramme indiquant les différents états des interrupteurs de la figure 7,

- les figures 8A et 8B sont respectivement des vues de dessus et de côté d'un exemple de réalisation pratique d'un système de conversion selon le troisième mode de réalisation,
- la figure 9 est une vue de côté d'une autre réalisation pratique du système de conversion selon le troisième mode de réalisation,
- la figure 10 représente la variation de la déformation d'une poutre encastrée-encastrée en fonction de la force électrostatique du système de la figure 9,
- la figure 11 représente la variation de la fréquence de résonance en fonction de l'amplitude de vibration pour une poutre encastrée-encastrée du système de la figure 9,
- la figure 12 est une représentation schématique d'une variante de réalisation du système de conversion de la figure 7.

## EXPOSÉ DÉTAILLÉ DE MODES DE RÉALISATION PARTICULIERS

Dans la suite de la description, les systèmes sont décrits de telle sorte qu'ils fonctionnent selon les modes distincts : un mode à tension constante et un mode à charge constante. Cependant on peut prévoir que ces deux modes se chevauchent, i.e. que la tension puisse varier en même temps que la charge et inversement, ceci dépendant de la commande des interrupteurs.

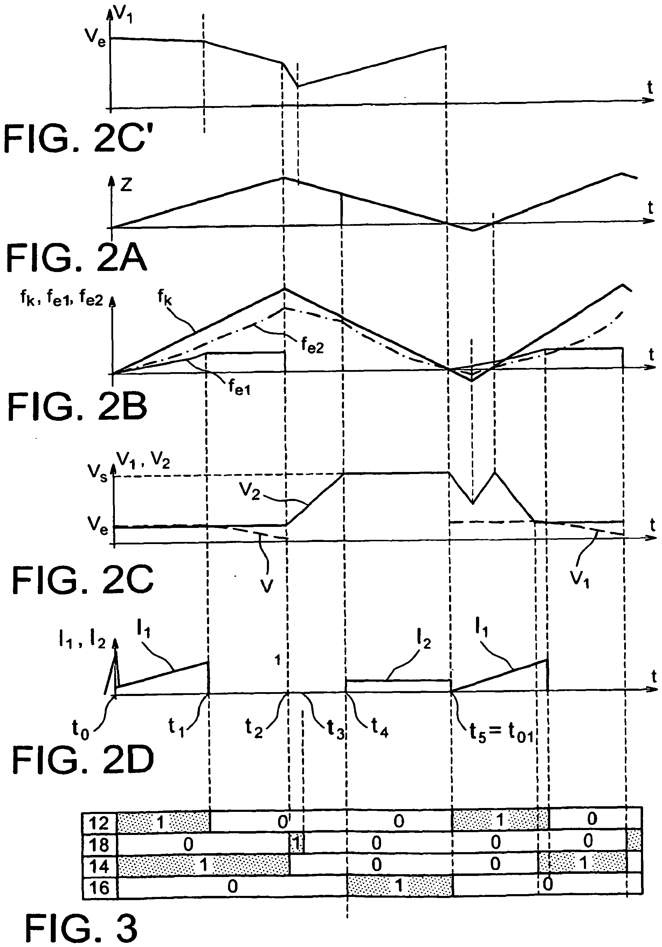

Dans les chronogrammes représentés sur les figures 3, 6 et 7D, le chiffre O indique un état ouvert de l'interrupteur et 1 indique un état fermé de l'interrupteur.

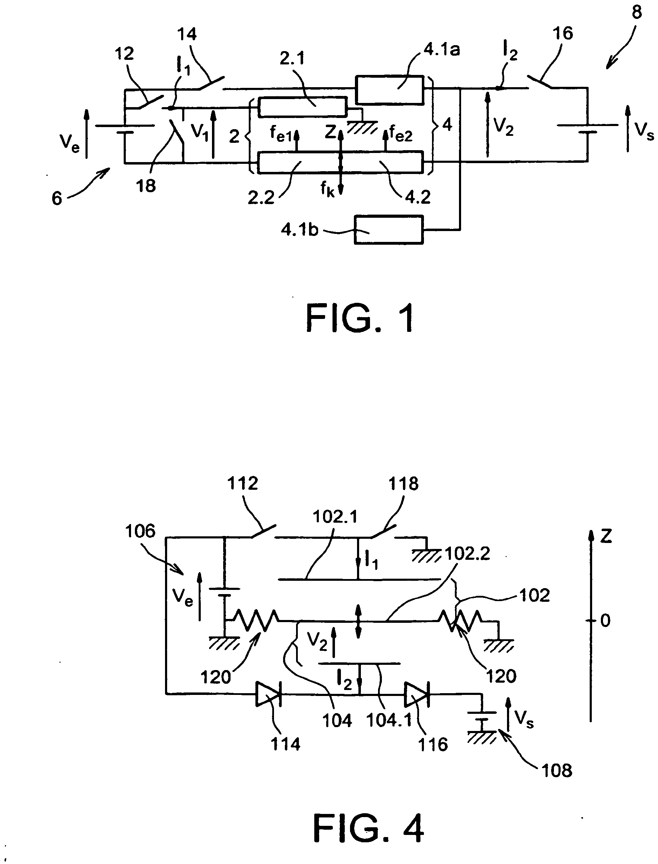

Sur la figure 1, on peut voir une représentation schématique d'un système de conversion selon un premier mode de réalisation comportant un premier condensateur 2 à capacité variable et un deuxième condensateur 4 à capacité variable, une source d'énergie électrique 6 sous un potentiel donné $V_e$ et un système de collecte 8 de l'énergie électrique sous un potentiel donné $V_S$, représenté sous forme d'une batterie. Dans la suite de la description, nous désignerons le système de collecte 8 par batterie.

Le premier condensateur comporte une plaque fixe 2.1 et une plaque mobile 2.2 formant un condensateur à entrefer variable ; le deuxième condensateur 4 comporte une plaque fixe 4.1 et une plaque mobile 4.2 formant également un condensateur à entrefer variable.

Dans l'exemple représenté, le deuxième condensateur 4 comporte deux plaques fixes 4.1a et 4.1b disposées de part et d'autre de la plaque mobile 4.2.

Les plaques mobiles 2.2, 4.2 des deux condensateurs sont solidaires en déplacement, plus particulièrement un rapprochement de la plaque mobile 2.2 de la plaque fixe 2.1 du premier condensateur, provoque un rapprochement de la plaque mobile 4.2 de la plaque fixe 4.1a du deuxième condensateur 4 et un éloignement de la plaque fixe 4.1b du deuxième condensateur 4, et un éloignement de la plaque mobile 2.2 de la plaque fixe 2.1 du premier condensateur, provoque un éloignement de la plaque mobile 4.2 de la plaque 4.1a du deuxième condensateur et un rapprochement de la plaque fixe 4.1b du deuxième condensateur 4.

Dans l'exemple représenté, les plaques mobiles 2.2 et 4.2 sont confondues. Dans la suite de la description, nous n'utiliserons que la référence 2.2 pour désigner la plaque mobile commune aux deux condensateurs 2, 4.

On peut également prévoir un deuxième condensateur 4 avec une seule plaque fixe.

Comme nous le verrons dans la suite de la description, des forces électrostatiques peuvent apparaître entre les plaques fixes 2.1, 4.1a et 4.1b et la plaque mobile 2.2, provoquant un déplacement de cette dernière ; des moyens élastiques de rappel (non représentés) sont donc prévus agissant sur la plaque mobile. Ces moyens de rappel forment des moyens de stockage temporaire de l'énergie électrique sous forme d'énergie mécanique. Par exemple, les moyens de rappel sont formés par une poutre apte à se déformer orthogonalement à son axe ou par un ou plusieurs ressorts.

La poutre déformable a pour avantage d'être facilement réalisable par des procédés microélectroniques dans le cas de systèmes intégrés, réalisés, par exemple en silicium.

La source d'énergie 6 est connectée entre la plaque mobile 2.2 et la plaque fixe 2.1, un interrupteur 12 étant prévu entre la source 6 et la plaque fixe 2.1, formant un interrupteur de charge du premier condensateur 2. La source d'énergie 6 est également reliée en parallèle aux plaques fixes 4.1a et 4.1b, un interrupteur 14 étant prévu entre la source 6 et les plaques fixes 4.1a et 4.1b. L'interrupteur 14 forme un interrupteur de charge du deuxième condensateur 4.

Par ailleurs, le système de collecte 8 est relié à la plaque mobile 2.2 et aux plaques fixes 4.1a, et 4.1b, un interrupteur de transfert 16 étant prévu entre la batterie 8 et la plaque fixe 4.1.

La plaque fixe 2.1 est également reliée à la plaque mobile 2.2 par l'intermédiaire d'un interrupteur 18 formant un interrupteur de décharge du premier condensateur.

La tension aux bornes du premier condensateur 2 est désignée $V_1$, la tension aux bornes du deuxième condensateur 4 est désignée $V_2$, la force électrostatique exercée par la plaque fixe 2.1 sur la plaque mobile 2.2 est désignée $f_{e1}$, la force électrostatique exercée par la plaque fixe 4.1 sur la plaque mobile 2.2 est désignée $f_{e2}$, et la force exercée par les moyens de rappel élastique est désignée $f_k$.

La position de la plaque mobile 2.2 est repérée le long d'un axe Z et est désignée z ; dans cet exemple, z est égale à zéro lorsque l'électrode mobile 4.2 (ou 2.2) se trouve à égale distance des deux électrodes fixes 4.1a et 4.1b, le ressort étant à l'état repos.

Nous allons maintenant expliquer le fonctionnement de ce système de conversion d'énergie électrique du potentiel $V_e$ à un potentiel $V_s$ supérieur à $V_e$, en se référant aux représentations graphiques des évolutions des différentes caractéristiques du système de conversion des figures 2A à 2D.

A l'état initial, les interrupteurs 12, 14, 16 et 18 sont ouverts, les premier et deuxième condensateurs sont déchargés. A l'instant $t_0$, les interrupteurs 12 et 14 sont fermés. Dés leur fermeture les plaques fixes 2.1 et 4.1a et 4.1b, ainsi que la plaque mobile 2.2 se chargent, les condensateurs 2 et 4 sont reliés électriquement, les tensions $V_1$ et $V_2$ sont toutes deux égales à $V_e$. Un courant I1 circule à travers l'interrupteur 12. Il y a donc apparition des forces électrostatiques $f_{e1}$ et $f_{e2}$ entre la plaque fixe 2.1 et la plaque mobile 2.2 et entre les plaques fixes 4.1a, 4.1b et la plaque mobile 2.2 respectivement. $f_{e2}$ est la résultante des forces électrostatiques exercées par les plaques fixes 4.1a et 4.1b sut la plaque mobile 2.2, $f_{e2}$ étant minimale quand la plaque mobile 2.2 est dans sa position de repos. Les plaques 4.1a et 4.1b sont choisies de telle sorte que la résultante $f_{e2}$ attire la plaque mobile 2.2 vers la plaque 4.1a lorsque la plaque mobile a commencé à se déplacer vers la plaque 4.1a (z positif), l'initialisation du mouvement de la plaque mobile, vers le haut dans cet exemple, étant le résultat de l'application de la force électrostatique $f_{e1}$.

La somme des forces électrostatiques $f_{e1}$, $f_{e2}$ étant supérieure à celle de la force mécanique $f_k$, la plaque mobile 2.2 se rapproche des plaques fixes 2.1, 4.1a, z augmente comme cela est visible sur la figure 2A. Il y a donc un stockage d'énergie sous forme mécanique (énergie cinétique et potentielle).

Les forces électrostatiques $f_{e1}$, $f_{e2}$ et la force mécanique $f_k$ croissent comme représentées sur la figure 2B du fait du rapprochement des plaques 2.1, 4.1a et 2.2.

L'interrupteur 12 reste fermé jusqu'à l'instant t1. L'énergie électrique puisée dans la source 6 est stockée sous forme d'une énergie mécanique potentielle dans les moyens élastiques par déformation de ceux-ci, mais aussi cinétique à cause du déplacement de l'électrode, l'électrode a en effet une vitesse non nulle. La quantité d'énergie stockée est d'autant plus importante que la durée $t_1 - t_0$ est longue.

Il est à noter que, lorsque l'on charge une capacité initialement complètement déchargée, à partir d'une source de tension en fermant un interrupteur, il y a autant d'énergie perdue que d'énergie transférée au condensateur, soit $1/2C \times V_e^2$ dissipée dans l'interrupteur au moment de sa fermeture et $1/2C \times V_e^2$ effectivement transférée vers le condensateur à charger, alors que l'énergie consommée dans la source à $V_e$ est égale à $Cx\,V_e^2$. Il est donc préférable d'avoir un condensateur de capacité minimale lors de la fermeture de l'interrupteur 12 à l'instant $t_0$. Par conséquent, le pourcentage d'énergie perdue par rapport à l'énergie transférée lors de cette phase, entre t0 et $t_1$, est d'autant plus faible que le rapport de capacité C1 du premier condensateur 2 entre le moment de l'ouverture de l'interrupteur 12 et de la fermeture de l'interrupteur 12 est grand.

Selon l'invention, lors d'une étape suivante, à l'instant $t_1$, l'interrupteur 12 est ouvert et l'interrupteur 18 est maintenu ouvert, le courant $I_1$ devient nul comme on peut le voir sur la figure 2D. Le système fonctionne alors sous charge constante, la force électrostatique $f_{e1}$ cesse donc d'augmenter. Ceci est représenté par un palier sur la figure 2B. La plaque 2.2 poursuit son mouvement et se rapproche des plaques fixes 2.1 et 4.1a. Le potentiel électrique décroît au fur et à mesure que la capacité du condensateur 2 augmente (du fait du rapprochement des plaques 2.2 et 2.1), ainsi que l'énergie électrique associée. L'énergie électrique stockée dans le condensateur 2, à l'instant t1, se transforme progressivement en énergie mécanique, qui est stockée dans les moyens élastiques de rappel.

A un instant $t_2$, lorsque la plaque mobile est très proche des plaques fixes, i.e. lorsque z atteint une valeur maximale, l'interrupteur 14 est ouvert, l'interrupteur 12 reste ouvert et l'interrupteur 18 est temporairement fermé afin d'évacuer les charges de la plaque fixe 2.1 du premier condensateur 2, la force électrostatique $f_{e1}$ devient nulle.

Comme expliqué précédemment, il est à noter que l'énergie dissipée lors de la fermeture de l'interrupteur 18 est d'autant plus faible que la variation de capacité du condensateur 2 entre le moment de l'ouverture de l'interrupteur 12, à l'instant t1, et le moment de fermeture de l'interrupteur 18, à l'instant t2, est importante. Grâce à cette phase à charge constante, entre les instants t1 et t2, on réduit l'énergie électrique stockée dans le condensateur qui sera perdue lors de la fermeture de l'interrupteur 18.

Selon une variante de mise en oeuvre du fonctionnement décrit ci-dessus, on effectue une décharge partielle du condensateur 2 entre les instants t2 et $t_3$. L'évolution de la tension V1 dans le cas d'une décharge partielle est visible sur la figure 2C'. On constate que lors du retour de la plaque mobile vers sa position d'équilibre, comme décrit ci-après. Il existe alors un niveau de décharge partielle du condensateur 2 tel que la tension V1 est sensiblement égale à Ve en fin de cycle ou plus précisément à l'instant de démarrage t01 du cycle suivant. Cela permet astucieusement d'une part de limiter les pertes énergétiques pour le cycle considéré et d'autre part de supprimer la perte d'énergie lié à la fermeture de l'interrupteur 12 au démarrage du cycle suivant à l'instant t01.

La décharge du condensateur 2 doit être suffisante de sorte qu'à un instant t3 après réouverture de l'interrupteur 18, la force de rappel $f_k$ soit supérieure à la somme des forces électrostatiques. La plaque mobile 2.2 sous l'effet de la force de rappel $f_k$, se déplace alors vers sa position initiale par action des moyens de rappel, en s'éloignant des électrodes fixes 2.1 et 4.1.a.

De manière avantageuse, on peut prévoir que l'interrupteur 18 soit fermé lorsque les plaques 2.1 et 2.2 sont en limite de contact.

Une distance de sécurité peut être prévue entre la plaque mobile et les plaques fixes pour éviter tout endommagement. Cependant on peut prévoir que la plaque mobile vienne en appui contre une butée électriquement conductrice, ce qui permet de retirer automatiquement les charges stockées sans recourir à un interrupteur supplémentaire dont l'actionnement doit être commandé. La mise en contact avec la butée est telle qu'elle ne dissipe pas l'énergie mécanique de la plaque mobile 2.2, et n'endommage pas le système.

La plaque mobile 2.2, de par son retour vers sa position d'équilibre et donc de son éloignement de la plaque fixe 4.1.a, provoque une augmentation du potentiel électrique aux bornes du deuxième condensateur 4. En effet, lors du retour en position d'équilibre de la plaque mobile 4.2, la capacité C2 du deuxième condensateur diminue. Or, la plaque fixe 4.1 est isolée électriquement du reste du circuit par l'ouverture de l'interrupteur 14 (l'interrupteur 16 étant également maintenu ouvert), sa charge Q2 ne varie pas, on a alors :

$$V_2 = \frac{Q_2}{C_2} \quad (\text{I}),$$

une diminution de $C_2$ engendre donc à charge constante $Q_2$ une augmentation de $V_2$.

Cette phase est dans son principe sans perte.

A l'instant $t_4$, lors d'une étape suivante, l'énergie stockée sous forme mécanique, lors de la phase de déformation des moyens de rappel élastique, est restituée à la batterie 8 à un potentiel $V_s$. Pour cela, lorsque le potentiel $V_2$ atteint le potentiel Vs, l'interrupteur 16 se ferme. Le potentiel $V_2$ est alors limité et des charges sont transférées de la plaque fixe 4.1 vers la batterie 8. Cette phase est également dans son principe sans perte, puisque la tension aux bornes de l'interrupteur 16 est nulle au moment de sa fermeture (potentiel $V_s$ aux deux bornes).

Au cours des phases décrites ci-dessus, des charges d'un potentiel d'entrée $V_e$ vers un potentiel de sortie $V_s$ ont été transférées. En fait, le deuxième condensateur 4 joue le rôle de transporteur de charge et le premier condensateur 2 apporte le complément d'énergie nécessaire pour faire passer ces charges du potentiel $V_e$ vers le potentiel $V_s$.

A la fin d'un cycle, à l'instant t5, la plaque mobile 2.2 ne se retrouve pas en position initiale, comme on peut le voir sur la figure 2A, du fait de l'énergie cinétique résiduelle.

Les étapes de conversion de l'énergie électrique de potentiel $V_e$ en une énergie électrique de potentiel $V_s$ forment un cycle de conversion. Le convertisseur selon la présente invention peut fonctionner soit en mode continu, soit en mode transitoire, contrairement aux convertisseurs de l'état de la technique qui n'ont qu'un fonctionnement en mode continu autour d'une fréquence de résonance. Grâce à l'invention, on peut transférer de l'énergie rapidement et à tout moment, et ceci avec des pertes énergétiques réduites.

En outre, la décharge du condensateur entre les instants t2 et t3 est très rapide et peut être inférieure à 1/100<sup>ème</sup> de la période du mouvement mécanique entre la position initiale et son retour vers la position initiale, entre t0 et t5.

Grâce à l'invention, on peut effectuer des cycles de manière continue, les cycles s'enchaînant (fonctionnement à la résonance mécanique de l'élément mobile ou en dehors de cette résonance), ou alors de façon arbitraire dans le temps (transferts asynchrones) suivants les applications, un temps indéterminé s'écoulant entre chaque cycle.

On notera que dans la présente invention, on choisit de préférence une commande judicieuse des interrupteurs compatible avec les temps de relaxation des composants mécaniques de rappel de l'élément mobile. Une telle commande judicieuse permet à un système selon l'invention de fonctionner en dehors de sa fréquence de résonance mécanique, contrairement aux dispositifs de l'état de l'art.

Le fonctionnement de manière continue a pour avantage de réduire les pertes électriques. En effet, comme cela a été expliqué ci-dessus, lors de la charge d'un condensateur complètement déchargé il y a consommation d'énergie électrique, celle-ci étant perdue, ceci se matérialise par un pic de courant pour $I_1$, en début de cycle (t0), comme cela est visible sur la figure 2D. Cependant lorsqu'un nouveau cycle, à l'instant $t_{01}$, a lieu juste après le premier cycle sans interruption et si le premier condensateur 2 n'est volontairement pas complètement déchargé lors de la fermeture de l'interrupteur 18, il n'y a alors pas besoin de charger le condensateur 2 lors de la fermeture de l'interrupteur 12. Il n'y a alors pas de pic de courant dissipatif, comme on peut le voir sur la figure 2D. Il n'y a donc pas de pertes électriques lors du deuxième cycle. Par conséquent les cycles suivants se déroulent sans perte électrique due à ce phénomène de précharge des deux côtés de l'interrupteur 12, seules restent les pertes associées à la décharge partielle ou totale du condensateur 2.

La décharge partielle du premier condensateur peut être obtenue par un transistor avec un temps calibré ou au moyen d'un transistor associé à une résistance et formant un circuit RC avec le condensateur 2.

A l'inverse, dans le cas d'un fonctionnement asynchrone, la perte en début de cycle est présente à chaque fois, puisqu'il est nécessaire de recharger le premier condensateur.

L'utilisation de deux électrodes fixes 4.1a et 4.1b dans le premier mode de réalisation de la figure 1 présente l'avantage d'améliorer l'aptitude de contrôle du dispositif de conversion.

En effet, la force électrostatique $f_{e2}$, qui est la résultante des forces électrostatiques exercées par les deux plaques fixes 4.1a et 4.1b sur la plaque mobile 4.2, est directement proportionnelle à la position z de la plaque mobile 4.2 lorsque la charge électrique est laissée constante sur C2 (interrupteurs 14 et 16 ouverts).

Par contre, la force électrostatique $f_{e1}$ qui est la force électrostatique entre la plaque fixe 2.1 et la plaque mobile 2.2 est constante à charge constante, ce qui est le cas après décharge totale ou partielle du condensateur 2. Si la décharge n'est pas totale il reste une force électrostatique résiduelle $f_{e1res}$, que l'on peut considérer comme négligeable devant $f_{e2}$.

On peut donc écrire :

$$f_{e2} = k_{fe2}z$$

$$f_k = k_r z$$

avec $k_{fe2}$ un coefficient de proportionnalité et kr la constante de raideur des moyens élastiques.

Par conséquent, à partir de l'instant t3 la plaque mobile 2.2 est soumise à la force de rappel des moyens élastiques et à $f_{e2}$. En choisissant $k_{fe2}$ inférieur à $k_r$, on est sûr que, lorsque $f_{e1}$ sera nulle ou presque nulle, la résultante des forces appliquées à la plaque mobile 2.2 permettra à celle-ci de s'écarter de la plaque 4.1a, pour retourner vers sa position d'équilibre.

Sur la figure 4, on peut voir un deuxième mode de réalisation d'un convertisseur électrique selon la présente invention dans lequel la plaque mobile est disposée entre les plaques fixes des deux condensateurs à capacités variables.

Le convertisseur comporte un premier condensateur 102 formé d'une plaque fixe 102.1 et d'une plaque mobile 102.2 formant un condensateur à entrefer variable, un deuxième condensateur 104 formé d'une plaque fixe 104.1 et de la plaque mobile 102.2 formant un condensateur à entrefer variable. Le convertisseur comprend en outre une source 6 d'énergie à une tension $V_e$, dont une première borne est reliée à la masse et reliée à la plaque mobile 102.2, une deuxième borne étant reliée, par l'intermédiaire d'un interrupteur 112, à la plaque fixe 102.1, et étant reliée, par l'intermédiaire d'une diode 114 à la plaque fixe 104.1. Le convertisseur comprend en outre un collecteur 108 d'énergie électrique à une tension $V_s$ appelé ci-après batterie. Une diode 116 est disposée entre la plaque fixe 104.1 et le collecteur 108.

La plaque fixe 102.1 est également reliée à la masse par l'intermédiaire d'un interrupteur 118.

La plaque mobile 102.2 peut se déplacer selon un axe z orthogonal à la plus grande surface pour se rapprocher ou s'éloigner des plaques fixes 102.1, 104.1. Des moyens élastiques 120 relient la plaque mobile à un châssis (non représenté) et permettent de ramener la plaque mobile dans sa position d'équilibre. Dans l'exemple représenté, les moyens élastiques sont des ressorts. La position d'équilibre avec z nul est celle de la plaque mobile 102.2, sans application de forces électrostatiques entre les plaques fixes 102.1, 104.1 et la plaque mobile 102.2.

Il est prévu que la surface de la plaque fixe 102.1 en regard de la plaque mobile 102.2 soit plus grande que la surface de la plaque fixe 104.1 en regard de la plaque mobile 102.2. Ainsi l'attraction électrostatique exercée par la plaque 102.1 est plus forte que celle exercée par la plaque 104.1 pour une même tension électrique appliquée lorsque l'électrode mobile 102.1 est proche de sa position d'équilibre.

$V_1$ est la différence de potentiel aux bornes du premier condensateur 102 et $V_2$ est la différence de potentiel aux bornes du deuxième condensateur 104.

Dans le cas de plaques à surfaces égales, il est avantageux d'avoir une structure asymétrique pour amorcer le mouvement, pour cela on décale la position d'équilibre, i.e. on place l'électrode mobile 102.2 plus près de l'électrode 102.1 que de l'électrode 104.1. Le décalage est tel que la position initiale, lorsque $V_2$ est égale à $V_e$, est par exemple la position milieu entre l'électrode 102.1 et 104.1. Cependant une structure symétrique ne sort pas du cadre de la présente invention.

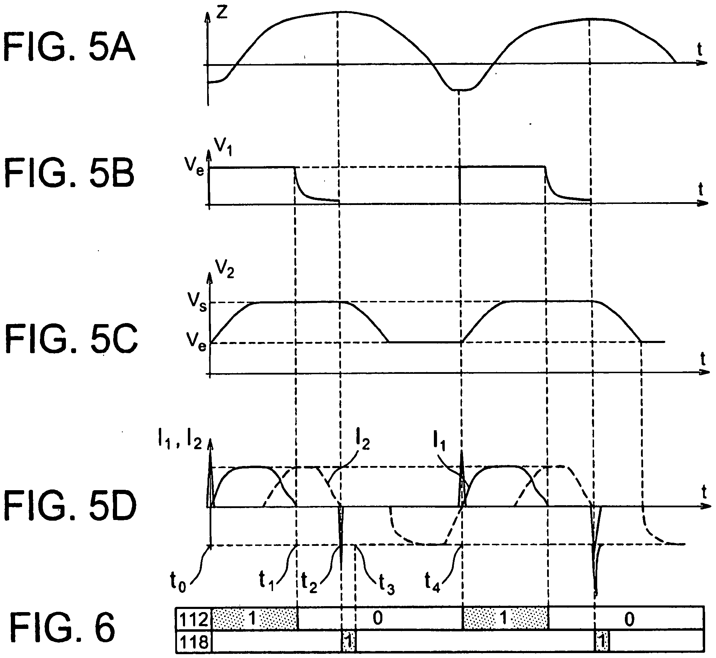

Nous allons maintenant expliquer le fonctionnement du convertisseur selon la figure 4 à l'aide des représentations graphiques 5A à 5D et du chronogramme d'état de l'interrupteur 112 de la figure 6.

A l'état initial, l'interrupteur 112 est ouvert, seule la plaque fixe 104.1 du deuxième condensateur 104 est polarisée à la tension $V_e$, V2 = $V_e$, via la diode 114 (à la tension de diode près). La plaque 104.1 portant des charges électriques, il y a alors apparition d'une force électrostatique entre la plaque fixe 104.1 et la plaque mobile 102.2. La plaque mobile 102.2 se déplace par conséquent vers la plaque fixe 104.1, la coordonnées z est donc négative comme on peut le voir sur la figure 5A à t = 0.

Lors d'une étape suivante, l'interrupteur 112 est fermé, la plaque 102.1 se trouve alors également à la tension

$V_e$, $V_1 = V_e$. Une force électrostatique apparaît alors également entre la plaque fixe 102.1 et la plaque mobile 102.2. Or la surface de la plaque fixe 102.1 en regard de la plaque mobile 102.2 est plus grande que celle de la plaque 104.1, l'attraction exercée par la plaque fixe 102.1 sur la plaque mobile 102.2 est donc supérieure à celle exercée par la plaque fixe 104.1, la plaque mobile 102.2 change de sens de déplacement et se déplace désormais vers la plaque fixe 102.1, en s'éloignant de la plaque fixe 104.1. Cet éloignement engendre alors un blocage de la diode 114, et une augmentation de la tension $V_2$ aux bornes du deuxième condensateur 104 à charge constante, les diodes 114 et 116 étant bloquées, puis une conduction de la diode 116 lorsque la tension $V_2$ aux bornes du condensateur atteint la valeur $V_s$ (cf. figure 5C) et un transfert de charges de la plaque fixe 104.1 du deuxième condensateur 104 vers la batterie 108, puisque la charge diminue lorsque la capacité diminue à tension constante $V_s$.

Lors d'une étape suivante, l'interrupteur 112 est à nouveau ouvert. De par son inertie, la plaque mobile 102.2 poursuit son déplacement jusqu'à une position z maximale. L'interrupteur 112 étant ouvert, la quantité de charge stockée dans le condensateur 102 reste constante et, de par l'augmentation de la capacité électrique du fait du rapprochement des plaques 102.1 et 102.2 du condensateur 102, la tension $V_1$ diminue comme cela est représenté sur la figure 5B.

L'énergie électrique stockée diminue donc au profit d'une augmentation de l'énergie potentielle mécanique stockée dans les moyens élastiques de rappel 120.

Ensuite, l'interrupteur 118 est fermé lorsque la plaque mobile 102.2 est dans la position z maximale, la plaque fixe 102.1 est alors mise à un potentiel nul par mise à la terre.

L'énergie stockée dans les ressorts de rappel 120 lors du rapprochement de la plaque mobile 102.2 de la plaque fixe 102.1 est alors restituée sous forme d'énergie cinétique et engendre un déplacement de la plaque mobile 102.2 en direction de la plaque fixe 104.1 jusqu'à une valeur z négative. Lorsque la plaque mobile 102.2 a atteint sa position z minimale, un nouveau cycle est amorcé, l'interrupteur 112 est alors fermé et un cycle de conversion tel que décrit ci-dessus peut reprendre.

Selon une variante de réalisation du convertisseur représenté en figure 4, l'interrupteur 18 peut être remplacé par des moyens de décharge partielle du condensateur 102 tels que ceux décrits ci-dessus en relation avec l'autre mode de réalisation. La décharge du condensateur 102 doit être suffisante pour permettre une inversion du mouvement de la plaque mobile 102.2. Une telle décharge partielle permet de diminuer les pertes dans l'interrupteur 112 lors du cycle suivant. Il faut pour ce faire, laisser sur l'électrode 102.2 une charge suffisante permettant à l'électrode 102.2 d'atteindre la tension Ve au moment de la fermeture de l'interrupteur 112.

Sur la figure 5D, on peut voir l'évolution des différents courants dans le système de la figure 4.

Dans ce mode de réalisation, l'énergie potentielle stockée dans les ressorts permet de ramener la plaque mobile 102.2 vers sa position d'équilibre, cette énergie sera convertie en énergie électrique lors du cycle suivant.

Ce mode de réalisation présente le même avantage que le premier mode de réalisation dans le cas d'un fonctionnement en continu, i.e. il y a moins de pertes au deuxième cycle. En effet, le fait de réaliser un premier cycle permet de positionner la plaque mobile 102.2 dans une position plus éloignée de la plaque 102.1 (au-delà de sa position initiale). La capacité entre l'électrode 102.2 et l'électrode 104.1 s'en trouve alors augmentée : une charge électrique plus importante ($Q = CV_2$) est transférée vers l'électrode 104.1 puis vers la batterie 108 et, par là une plus grande quantité de charge est transférée à chaque cycle.

Dans le mode continu, appelé aussi mode résonant, l'interrupteur 112 peut alors être fermé à une valeur de z très faible, i.e. quand la capacité entre l'électrode 102.1 et l'électrode 102.2 est très faible : il y a alors moins de perte lors de la fermeture de l'interrupteur 112, voire aucune perte si une charge résiduelle est laissée sur l'électrode 102.1, comme cela a été expliqué en relation avec le premier mode de réalisation.

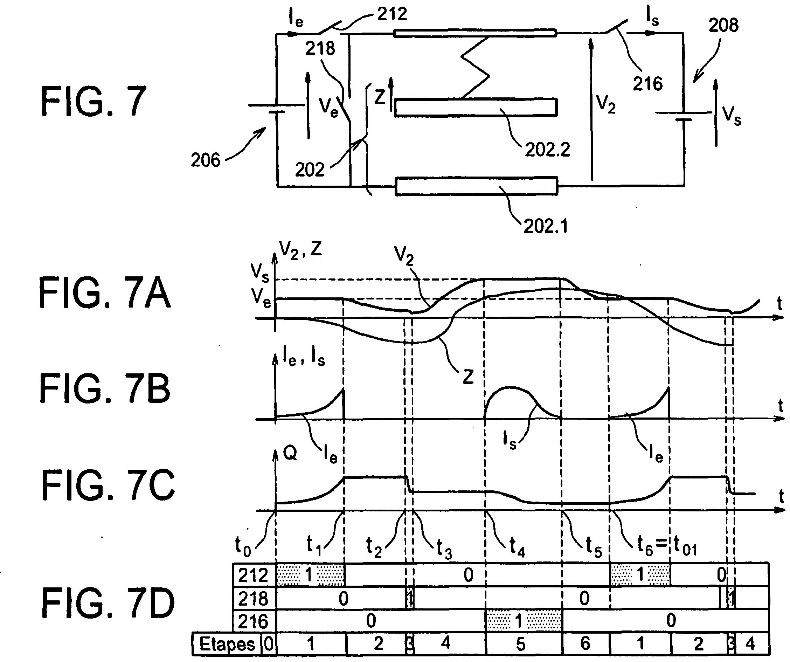

Sur la figure 7, on peut voir un troisième mode de réalisation d'un système de conversion électrique selon la présente invention comportant un seul condensateur à capacité variable dont la fonction varie en fonction du temps.

Le système de conversion comporte un condensateur à capacité variable 202 formé par une électrode fixe 202.1 et une électrode mobile 202.2. Une source d'énergie 206 à une tension $V_e$ est reliée d'une part à l'électrode mobile 202.2 du condensateur par l'intermédiaire d'un interrupteur 212, dit interrupteur de charge et d'autre part à l'électrode fixe 202.1 du condensateur. Un interrupteur 218, dit interrupteur de décharge, est placé en parallèle sur le condensateur à capacité variable 202. Un collecteur d'énergie 208 à une tension $V_s$ est relié d'une part à la plaque mobile 202.2 du condensateur 202 par l'intermédiaire d'un interrupteur 216 et d'autre part à la plaque fixe 202.1 du condensateur.

Des moyens élastiques de rappel 220 sont également prévus pour ramener la plaque mobile dans sa position initiale, dans l'exemple représenté ces moyens élastiques sont schématisés sous la forme d'un ressort.

Nous allons maintenant expliquer le fonctionnement de ce système à l'aide des représentations graphiques des figures 7A à 7C en correspondance avec le chronogramme de la figure 7D.

Avant l'instant $t_0$, tous les interrupteurs sont ouverts, la structure électrostatique est complètement déchargée. La tension V2 est nulle.

A l'instant $t_0$, l'interrupteur 212 est fermé, le condensateur à capacité variable 202 se charge rapidement à la tension Ve, le temps de charge est court devant la période du mouvement mécanique de l'électrode 202.2. Cette charge étant rapide, elle fait apparaitre un pic de courant $i_e$. Durant cette charge, la moitié de l'énergie consommée à la source

$V_e$ est transférée à la capacité 202, l'autre moitié est dissipée dans l'interrupteur 212. De manière avantageuse, on ferme l'interrupteur 212 à un moment où la capacité 202 est la plus faible possible, puisque l'énergie dissipée est égale à $E=\frac{1}{2}CV_e^2$.

Entre les instants $t_0$ et t1 (Etape 1), du fait de la présence d'une tension aux bornes du condensateur 202 il y a apparition d'une force électrostatique entre les électrodes 202.1 et 202.2. Cette force électrostatique provoque le rapprochement des deux électrodes 202.1, 202.2 et une augmentation de la capacité du condensateur 202. Les énergies mécanique et électrique stockées dans l'ensemble condensateur plus moyens de rappel sont alors augmentées. En effet, le déplacement de l'électrode 202.2 engendre une augmentation de l'énergie cinétique et de l'énergie mécanique potentielle stockée dans les éléments élastique (ressort) et l'augmentation de la capacité, appelée $C_{augmentée}$, engendre une augmentation de l'énergie électrique stockée puisque $E=\frac{1}{2}C_{augmentée}V_e^2$. Cette augmentation globale de l'énergie stockée dans la structure électrostatique provient de la source Ve et se fait quasiment sans pertes.

A l'instant t1, l'interrupteur 212 est ouvert. On note la charge électrique stockée sur la capacité 212 à cet instant $Q_{t1}=C_{t1}V_e$

Lors de l'étape 2, l'électrode 202.1 poursuit son mouvement à charge constante ($Q=Q_{t1}= C_{t1}V_e$). La tension $V_2$ aux bornes du condensateur 202 décroit au fur et à mesure que la capacité augmente ($V_2=Q_{t1}/C_{augmentée}$) ainsi que l'énergie électrique associée ($E=\frac{1}{2}Q_{t1}V$). En fait l'énergie électrique stockée sur le condensateur 202 à l'instant t1 se transforme progressivement en énergie mécanique (augmentation de l'énergie mécanique stockée dans les éléments élastique).

A l'instant t2, avantageusement au moment où l'électrode 202.2 est au plus proche de l'électrode 202.1, c'est-à-dire quand la capacité du condensateur est maximale ($C_{max}$) et donc que l'énergie électrique stockée dans le condensateur 202 est à son plus faible, puisque $E=\frac{1}{2}Q_{t1}^2/C_{max}$, l'interrupteur 218 est fermé un court instant devant la période mécanique de déplacement de l'électrode 202.2, déchargeant ainsi une partie de la charge électrique stockée dans la capacité 202.

A l'instant t3, au début de l'étape 4, l'interrupteur 218 est rouvert. La diminution de la charge électrique stockée dans le condensateur 202 provoque un nouvel équilibre des forces électrostatique et mécanique favorable à un retour de l'électrode 202.2, celle-ci s'éloigne de l'électrode 202.1. L'ensemble des interrupteurs étant ouvert, ce retour se fait durant l'étape 4 à charge constante. La capacité du condensateur 202 diminuant, la tension électrique à ses bornes augmente puisque V=Q/C.

A l'instant t4, de préférence au moment où le potentiel aux bornes du condensateur 202 atteint la tension de sortie $V_s$, l'interrupteur 216 est fermé. La fermeture de l'interrupteur 216 se fait alors au moment où la différence de potentiel entre ces bornes est nulle, puisque le potentiel aux deux bornes du condensateur est égal à $V_s$, les pertes associées à cette fermeture sont alors sensiblement nulles. L'électrode 202.2 continue de s'éloigner de l'électrode 202.1 à tension constante (sous $V_s$). Une partie de la charge électrique stockée sur l'électrode 202.2 est transférée vers le collecteur 208, la charge sur le condensateur 202 décroit.

A partir de l'instant t5, l'interrupteur 216 est ouvert de préférence au moment où la capacité du condensateur 202 atteint sa valeur minimale, ceci de manière à maximiser l'énergie électrique transférée à la sorti : $E_{transférée}=\frac{1}{2}(C_{t5}-C_{t4})V_s^2$

L'électrode mobile 202.2 retourne en direction de l'électrode 202.1, la capacité 202 augmente alors à charge électrique constante et la tension à ces bornes décroit, la tension V2 décroit.

A l'instant t6, l'interrupteur 212 se ferme, de préférence au moment où la tension $V_2$ aux bornes du condensateur 202 atteint $V_e$. La fermeture de l'interrupteur se fait alors au moment où la différence de potentiel entre ces bornes est nulle, le potentiel étant égal a $V_e$ de chaque coté. Les pertes associées à cette fermeture sont donc sensiblement nulles. L'enchainement des cycles permet d'éviter les pertes associées à la fermeture de l'interrupteur 212. En effet, à la transition au démarrage t0 il y a des pertes du fait qu'initialement la capacité 212 est complètement déchargée, ce n'est plus le cas à $t_{01}$.

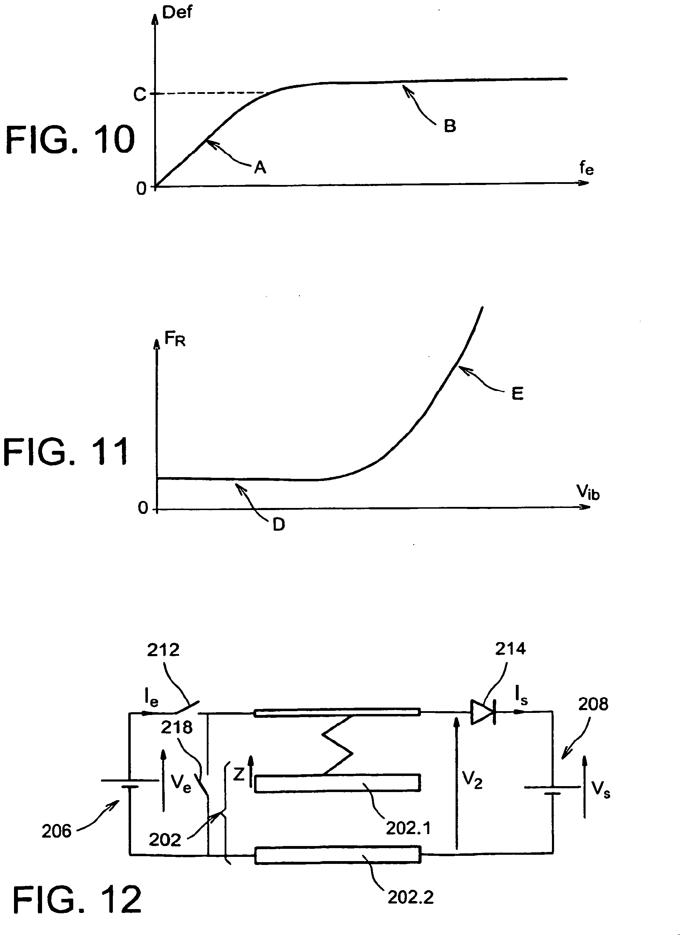

Sur la figure 12, on peut voir une variante de réalisation du système de la figure 7, dans lequel l'interrupteur de transfert 216 a été remplacé par une diode 214. Le fonctionnement de ce système est sensiblement identique à celui de la figure 7. Dans la phase du mouvement de l'électrode mobile 202.1 correspondant à une diminution de la capacité du condensateur 202, la diode 214 devient conductrice et permet un transfert de charge vers le collecteur 208 quand la tension V2 devient supérieure à la tension Vs, à la tension de diode près.

Pour tous les modes de réalisation, les interrupteurs sont par exemple commandés en fonction du temps, en fonction d'une mesure de capacité ou de tension ou en fonction de la dérivée nulle de la tension. On peut également utiliser un capteur de position pour détecter les positions de la plaque mobile.

Tous les modes de réalisation de la présente invention précédemment décrits peuvent fonctionner en élévateur ou abaisseur de tension. On pourra prévoir des moyens de détection du niveau de tension dans les moyens de collecte en sortie et un dispositif de régulation aptes à rétroagir entre autre sur la commande des interrupteurs de charge et de décharge. On pourra par exemple augmenter/diminuer le nombre de cycles de conversion.

Dans les exemples représentés, le système comporte, soit deux condensateurs présentant au moins une électrode distincte (premier et deuxième modes de réalisation), soit un seul condensateur. On notera que chaque condensateur peut être constitué de plusieurs condensateurs en parallèle, par exemple sous la forme de condensateurs de type peignes interdigités, bien connus dans le domaine de la conversion d'énergie de vibration en énergie électrique. Dans le cas du premier mode de réalisation, il n'est pas nécessaire de prévoir autant de premiers condensateurs 12 que de deuxièmes condensateurs, on peut en effet prévoir qu'un condensateur 2 permette la conversion de l'énergie électrique en énergie mécanique pour plusieurs deuxièmes condensateurs convertissant cette énergie en énergie électrique à un potentiel différent du potentiel d'entrée.

Notre invention permet donc de conserver un rendement élevé même dans le cas de systèmes de très petites dimensions et permet d'adresser aussi bien des systèmes de très petites puissances de l'ordre du nanoWatt que des systèmes de moyennes puissances, de l'ordre du Watt.

La présente invention s'applique donc notamment à tous les systèmes basse puissance, par exemple aux appareils électroniques portables comme les téléphones portables ou les ordinateurs portables.

La présente invention est particulièrement intéressante pour ce type d'appareil. En effet, ces appareils électroniques comportent généralement plusieurs composants fonctionnant à des tensions différentes d'alimentation. Actuellement, il faut utiliser des systèmes de conversion encombrants pour chacun de ces composants. Grâce à l'invention, on peut réaliser un système de conversion intégré pour chaque tension, qui en plus ne produit pas ou peu de chaleur par effet Joule. On peut également prévoir d'utiliser un seul condensateur d'actionnement pour effectuer des conversions à plusieurs niveaux de tension dans le cas notamment du premier mode de réalisation.

Le système peut être intégré dans les appareils électroniques, sans en augmenter l'encombrement, contrairement aux systèmes de conversion actuels qui sont externes aux appareils auxquels ils fournissent l'énergie (chargeur de téléphone portable par exemple).

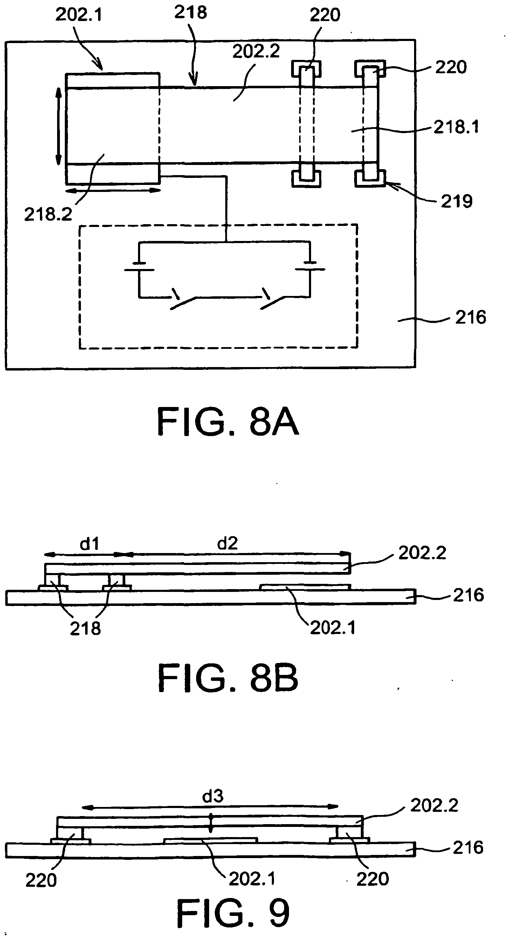

Sur les figures 8A et 8B, on peut voir un exemple de réalisation pratique d'un système de conversion selon le troisième mode de réalisation.

Le système comporte un support 216, de type circuit imprimé, sur lequel est réalisée l'électrode fixe 202.1, par exemple par métallisation.

L'électrode mobile 202.2 est formée par une extrémité suspendue 218.2, d'une poutre mécanique 218 sous forme de lame métallique, apte à se déformer en flexion disposée en regard de l'électrode fixe 202.1.

La poutre 218 est fixée par une première extrémité longitudinale 218.1 sur deux rangés de cales 220 fixées sur le support 216, permettant d'espacer avec une assez bonne précision l'électrode mobile de l'électrode fixe.

La zone 219 sur laquelle sont fixées les cales 220 a subi une métallisation, afin que le potentiel de la poutre 218 soit accessible, les cales 220 étant conductrice et le circuit imprimé étant isolant.

La poutre 218 est par exemple réalisée en acier inox. Celle-ci comporte une deuxième extrémité longitudinale 218.2 opposée à la première extrémité longitudinale 218.1 ayant une forme après déformation telle qu'elle devient parallèle à l'électrode fixe 202.1 lorsqu'elle s'en rapproche fortement.

A titre d'exemple, la distance d1 séparant les deux cales 220 mesure 1 cm. La longueur d2 de la flèche de l'électrode mesure 3 cm, et l'entrefer entre l'électrode fixe 202.1 et l'électrode mobile 202.2 est égale à 100 $\mu$m.

Nous allons, à titre d'exemple, calculer le rapport Energie/Puissance pouvant être convertie par ce type de système.

Prenons le cas d'une tension d'entrée Ve = 24 V et d'une tension de sortie Vs = 5 V.

Considérons que l'interrupteur 212 est fermé durant une durée $t_1$ telle que l'électrode mobile 202.2 arrive à 0,1 $\mu$m de l'électrode fixe 202.1 avec un potentiel de 5 V et qu'elle s'éloigne ensuite jusqu'à 15 $\mu$m, l'interrupteur 214 étant fermé, alors l'énergie transférée $E_{transférée}$ à Vs sera:

$$E_{transférée} = 1/2(Cmax - Cmin)Vs^2,$$

$$C_{max} = \frac{\varepsilon_0 S}{d_{min}} = \frac{\varepsilon_0 \times 1cm^2}{0,1\mu m} = 8,854 nF$$

avec

$$C_{min} = \frac{\varepsilon_0 S}{d_{max}} = \frac{\varepsilon_0 \times 1cm^2}{15\mu m} = 59 pF$$

d'où $E_{transférée}$ = 110 nJ par cycle.

En choisissant une épaisseur et un matériau de poutre tels que celle-ci résonne à 10 kHz, alors il est possible de réaliser environ 10000 cycles par seconde, soit de transférer $10000 \times 110 \times 10^{-9}$=1,1 mW de la source $V_e$ vers la sortie $V_s$.

Par conséquent, il est avantageux d'avoir des entrefers réduits de façon à maximiser la capacité maximale $C_{max}$ et donc l'énergie convertible par cycle (à $C_{max}/C_{min} = d_{max}/d_{min}$ maintenu élevé). Cet avantage est particulièrement exploitable si on réalise la structure à l'aide des procédés de la microélectronique.

En outre, il est avantageux d'avoir une fréquence de résonance élevée si on souhaite convertir une puissance électrique importante.

Il est également avantageux que la poutre ait un facteur de qualité élevé pour minimiser les pertes mécaniques.

Sur la figure 9, on peut voir un autre exemple de réalisation pratique du système de conversion du troisième mode de réalisation

Dans cet exemple, la poutre 218 est suspendue par chacune de ses extrémités longitudinales 218.1, 218.1 au moyen de cales 220, permettant d'espacer précisément l'électrode mobile de l'électrode fixe. La poutre est du type lame encastrée-encastrée.

L'électrode mobile 202.2 est donc formée par la partie centrale de la poutre et l'électrode fixe 202.1 est formée sur le support par métallisation.

A titre d'exemple, la longueur d3 de la poutre entre les deux cales est 6 cm. La distance au repos entre l'électrode mobile et l'électrode fixe est 100 $\mu$m.

Ce système est très similaire au système des figures 8A et 8B, il ne diffère que par le mode de déformation de la poutre. Dans le cas de déformations de la poutre de faibles amplitudes par rapport à son épaisseur, le comportement reste inchangé par rapport au système des figures 8A et 8B. Dans le cas où l'amplitude de déformation de la poutre devient importante par rapport à son épaisseur, celle-ci a un comportement fortement non-linéaire, c'est-à-dire une déformation en son centre (variation d'entrefer) qui n'est plus proportionnelle à l'effort électrostatique appliqué, mais de la forme représentée sur la figure 10. La courbe de la figure 10 représente la variation de la déformation Déf en fonction la force électrostatique, et comporte une zone linéaire désignée A, suivi d'un zone non linéaire désignée B. Le passage de la zone linéaire à la zone non linéaire symbolisé par la ligne en tiret C correspond sensiblement à une déformation égale à l'épaisseur de la poutre.

Dans le cas de petites déformations, c'est-à-dire lorsque celles-ci sont petites devant l'épaisseur de la poutre, il y a principalement un mode de flexion avec une déformation proportionnelle à l'effort appliqué. Par contre, pour des grandes déformations, c'est-à-dire au-delà de l'épaisseur de la poutre, il y a principalement un mode de traction (l'équivalent d'une corde) avec un effort qui évolue au cube de la déformation.

Cette non linéarité peut permettre de faciliter l'actionnement de l'électrode mobile. En effet, lorsque l'électrode mobile est éloignée de l'électrode fixe, l'effort électrostatique applicable est limité (la force électrostatique est proportionnelle au champ électrique E = $V_e$/entrefer). Par conséquent, le fait d'avoir une poutre plutôt souple lorsqu'elle est éloignée permet de la rapprocher même si les efforts électrostatiques sont limités. En contrepartie, lorsque l'électrode mobile se rapproche fortement de l'électrode fixe, l'effort électrostatique applicable est beaucoup plus important. Dans ce cas, le fait d'avoir une poutre qui se rigidifie n'est pas gênant au niveau de son actionnement, et cela permet alors de stocker plus d'énergie sous forme mécanique pour un même déplacement.

Il est alors avantageux de choisir un entrefer initial un peu supérieur à la zone linéaire, c'est-à-dire un peu supérieur à l'épaisseur de la poutre.

La non linéarité de la poutre engendre par ailleurs une dépendance de la fréquence de résonance à l'amplitude de la déformation comme cela est représenté sur la figure 11. La courbe de la figure 11 représente la variation de la fréquence de résonance $F_R$ en fonction de l'amplitude de la vibration Vib, et comporte une zone linéaire désignée D suivi d'une zone non linéaire désignée E

La non-linéarité, de part son effet sur la fréquence de résonance, peut permettre aussi de réguler le transfert de puissance. En effet, en agissant sur la commande des interrupteurs, il est possible de modifier l'amplitude de la déformation de la poutre et donc de faire varier la fréquence de résonance et donc de faire varier la fréquence des transferts de charge et donc la puissance électrique transmise de la source $V_e$ vers la sortie $V_c$. Pour modifier l'amplitude de la déformation, il suffit par exemple de faire varier la quantité d'énergie apportée à la poutre en faisant varier le temps de fermeture de l'interrupteur 212.

Le fait de pouvoir ajuster la fréquence de résonance permet, d'une part, d'ajuster la puissance électrique convertie, tout en restant dans un mode continue (et donc dans un mode à pertes réduites), et, d'autre part, d'avoir un nombre limité de commutations des interrupteurs et donc des pertes associées réduites lorsqu'il y a peu de puissance à transmettre, ce qui permet de conserver un bon rendement même à puissance convertie réduite (rapport puissance transmise/pertes sensiblement conservé).

L'homme de l'art pourra imaginer d'autres modes de réalisation d'un système de conversion selon la présente invention. On pourra par exemple utiliser d'autres types de condensateur à capacité variable, tel qu'un condensateur présentant une électrode pouvant se déplacer latéralement par rapport à une autre en faisant varier la surface en regard des deux électrodes.

**Revendications**

1. Procédé de conversion d'une première énergie électrique sous une première tension (Ve) vers une deuxième énergie électrique sous une deuxième tension (Vs) par un système de conversion comportant au moins une source de tension (6) à la première tension ($V_e$) reliée à un condensateur à capacité variable (202) par l'intermédiaire d'un interrupteur de charge (212), un interrupteur de décharge (18) étant placé en parallèle avec le condensateur à capacité variable, un moyen de collecte (208) de l'énergie sous la deuxième tension ($V_s$), et des moyens de transfert d'énergie (216) entre le condensateur à capacité variable (202) et le moyen de collecte (208), le condensateur à capacité variable (202) comportant une plaque fixe et une plaque mobile apte à s'écarter et à se rapprocher de la plaque fixe et des moyens élastiques de rappel de la plaque mobile vers sa position initiale, le procédé étant **caractérisé par** les étapes suivants, pour un cycle de conversion :

   a) fermer l'interrupteur de charge (212), l'interrupteur de décharge étant ouvert, pour charger le condensateur à capacité variable (202) à la première tension (Ve), et induire un déplacement de la plaque mobile avec augmentation de la capacité du condensateur,
   b) ouvrir l'interrupteur de charge (212) et maintenir ouvert l'interrupteur de décharge (218) pour permettre un fonctionnement à charge constante du condensateur, la capacité du condensateur (202) continuant d'augmenter,
   c) fermer l'interrupteur de décharge (218) pour permettre une décharge au moins partielle du condensateur à capacité variable (202) et produire une inversion du mouvement de l'élément mobile,

   les moyens de transfert assurant un transfert d'énergie du condensateur vers les moyens de collecte lors du mouvement de l'électrode mobile.

2. Système de conversion d'une première énergie électrique sous une première tension ($V_e$) vers une deuxième énergie électrique sous une deuxième tension ($V_s$) comportant au moins une source (6 ; 106 ; 206) de tension à la première tension ($V_e$) reliée à un condensateur à capacité variable (2 ; 102 ; 202) par l'intermédiaire d'un interrupteur de charge (12 ; 112 ; 212), un interrupteur de décharge (18 ; 118 ; 218) étant placé en parallèle avec le condensateur à capacité variable, un moyen de collecte (8 ; 108 ; 208) de l'énergie sous la deuxième tension ($V_s$), et des moyens de transfert d'énergie (4, 16 ; 104, 116 ; 216) entre le condensateur à capacité variable (202) et le moyen de collecte (208), le condensateur à capacité variable (202) comportant une plaque fixe, une plaque mobile apte à s'écarter et à se rapprocher de la plaque fixe et des moyens élastiques de rappel de la plaque mobile vers sa position initiale, ledit système de conversion étant **caractérisé par** des moyens de commande des interrupteurs de charge et de décharge de sorte que pour un cycle de conversion :

   a) lors d'une première étape, l'interrupteur de décharge est ouvert et l'interrupteur de charge est fermé assurant la charge du condensateur à la première tension (Ve), et un déplacement de la plaque mobile avec augmentation de la capacité du condensateur,
   b) lors d'une deuxième étape, l'interrupteur de charge est ouvert et l'interrupteur de décharge est maintenu ouvert permettant un fonctionnement à charge constante du condensateur, la capacité du condensateur continuant d'augmenter,
   c) lors d'une troisième étape l'interrupteur de décharge est fermé permettant une décharge au moins partielle du condensateur à capacité variable conduisant à une inversion du mouvement de l'élément mobile,

   les moyens de transfert assurant un transfert d'énergie du condensateur vers les moyens de collecte lors du mouvement de l'électrode mobile.

3. Système de conversion selon la revendication 2, dans lequel la commande des interrupteurs est telle que la fermeture de l'interrupteur de charge (12 ; 112 ; 212) a lieu lorsque la capacité du condensateur (2 ; 102 ; 202) est minimale.

4. Système de conversion selon la revendication 2, dans lequel la commande des interrupteurs est telle que la fermeture de l'interrupteur de décharge (18 ; 118 ; 218) a lieu lorsque la capacité du condensateur (2 ; 102 ; 202) est maximale.

5. Système de conversion selon la revendication 2, dans lequel l'une des électrodes du condensateur (202.2) est reliée au moyen de collecte (208) par l'intermédiaire d'un interrupteur ou d'une diode de transfert (216).

6. Système de conversion selon la revendication 5, dans lequel l'interrupteur ou la diode de transfert (216) sont passants lors d'une phase du mouvement de l'électrode mobile (202.2) du condensateur à capacité variable correspondant à une diminution de sa capacité.

7. Système de conversion d'énergie selon la revendication 2, dans lequel ledit condensateur à capacité variable constitue un premier condensateur (2, 102), le système comportant en outre un deuxième condensateur à capacité variable (4, 104) comportant au moins une plaque fixe (4.1 ; 104.1) et une plaque mobile (4.2 ; 102.2) apte à s'écarter ou à s'éloigner de la plaque fixe, les plaques mobiles des premier et deuxième condensateurs étant solidaires en mouvement, le deuxième condensateur à capacité variable (4, 104) étant relié au moyen de collecte (8) par l'intermédiaire d'un interrupteur ou d'une diode de transfert (16, 116).

8. Système de conversion selon la revendication 7, dans lequel le deuxième condensateur (4) comporte deux plaques fixes (4.1a, 4.1b) disposées de part et d'autre de la plaque mobile (4.2).

9. Système de conversion selon la revendication 7, dans lequel chaque condensateur comporte une plaque fixe (102.1, 104.1) disposée chacune d'un côté d'une plaque mobile commune (102.2).

10. Système de conversion selon la revendication 9, dans lequel la première plaque fixe (102.1) du premier condensateur (102) offre une surface en regard de la plaque mobile (102.2) supérieure à celle de la deuxième plaque fixe (104.1) du deuxième condensateur (104).

11. Système de conversion selon la revendication 2, dans lequel la durée de fermeture de l'interrupteur de décharge (18 ; 118 ; 218) est inférieure à un centième de la durée du cycle de conversion.

12. Système de conversion selon l'une des revendications 2 à 11, dans lequel l'interrupteur de décharge (18, 118, 218) est formé d'éléments portés par la plaque fixe et la plaque mobile dudit condensateur à capacité variable (2 ; 102 ; 202), la décharge ayant lieu par mise en contact des éléments portés par les plaques.

13. Système de conversion selon l'une des revendications 2 à 11, dans lequel les interrupteurs sont des interrupteurs commandables en fonction du temps, de la valeur de la position d'une plaque mobile, de la valeur de capacité de l'un des condensateurs, de la tension aux bornes d'un condensateur ou de la dérivée de la tension aux bornes d'un condensateur.

14. Système de conversion selon l'une des revendications 2 à 13, ledit système étant un système intégré réalisé en silicium.

15. Système de conversion selon l'une des revendications 2 à 14, dans lequel les moyens de rappel sont choisis parmi les ressorts, les lames et les poutres déformables.

16. Ensemble de conversion d'énergie électrique comportant au moins deux systèmes de conversion selon l'une des revendications 2 à 15, ledit ensemble étant apte à convertir la première énergie à la première tension en plusieurs deuxièmes énergies à plusieurs deuxièmes tensions.

17. Ensemble de conversion selon la revendication 16, dans lequel les systèmes ont une électrode mobile commune.

18. Dispositif électronique comportant au moins un système de conversion d'énergie électrique selon l'une quelconque des revendications 2 à 15 ou un ensemble de conversion selon la revendication 16 ou 17.

**Claims**

1. Method for converting a first electrical energy at a first voltage ($V_e$) into a second electrical energy at a second voltage (Vs) by a conversion system comprising at least one voltage source (6) at the first voltage ($V_e$) connected to a variable capacitor (202) through a charge switch (212), a discharge switch (18) being placed in parallel with the variable capacitor, a means of collecting energy (208) at the second voltage ($V_s$), and means of transferring energy (216) between the variable capacitor (202) and the collection means (208), the variable capacitor (202) comprising a fixed plate and a mobile plate capable of moving away from and towards the fixed plate and elastic means to return the mobile plate to its initial position, the method being **characterized by** the following steps, for one complete conversion cycle:

a) close the charge switch (212), while the discharge switch remains open, to charge the variable capacitor (202) at the first voltage (Ve), and induce a displacement of the mobile plate increasing the capacitance of the capacitor;
b) open the charge switch (212) while keeping the discharge switch (218) open to allow operation of the capacitor at constant charge, the capacitance of the capacitor (202) continuing to increase;
c) close the discharge switch (218) to allow at least partial discharge of the variable capacitor (202) and to invert the movement of the mobile element;

the transfer means providing energy transfer from the capacitor to the collection means during movement of the mobile electrode.

2. Conversion system from a first electrical energy at a first voltage ($V_e$) to a second electrical energy at a second voltage ($V_s$) comprising at least one voltage source (6 ; 106 ; 206) at the first voltage ($V_e$) connected to a variable capacitor (2 ; 102 ; 202) through a charge switch (12 ; 112 ; 212), a discharge switch (18 ; 118 ; 218) being placed in parallel with the variable capacitor, an energy collection means (8 ; 108 ; 208) at the second voltage ($V_s$), and means of transferring energy (4, 16 ; 104, 116 ; 216) between the variable capacitor (202) and the collection means (208), the variable capacitor (202) comprising a fixed plate, a mobile plate capable of moving away from and towards the fixed plate and elastic means to return the mobile plate to its initial position;
said conversion system being characterized byt means of controlling the charge and discharge switches such that for a conversion cycle:

a) during a first step, the discharge switch is opened and the charge switch is closed to charge the capacitor at the first voltage (Ve), and the mobile plate is displaced increasing the capacitance of the capacitor;
b) during a second step, the charge switch is open and the discharge switch is kept open to allow operation of the capacitor at constant charge, the capacitance of the capacitor continuing to increase;
c) during a third step, the discharge switch is closed allowing at least partial discharge of the variable capacitor leading to an inversion of the movement of the mobile element;

the transfer means transferring energy from the capacitor to the collection means during movement of the mobile electrode.

3. Conversion system according to claim 2, in which the switches are controlled such that the charge switch (12; 112 ; 212) is closed when the capacitance of the capacitor (2; 102; 202) is minimum.

4. Conversion system according to claim 2, in which the switches are controlled such that the discharge switch (18; 118; 218) is closed when the capacitance of the capacitor (2; 102; 202) is maximum.

5. Conversion system according to claim 2, in which one of the electrodes of the capacitor (202.2) is connected to the collection means (208) through a transfer switch or diode (216).

6. Conversion system according to claim 5, in which the transfer switch or diode (216) is conducting during a movement phase of the mobile electrode (202.2) of the variable capacitor corresponding to a reduction in its capacitance.

7. Energy conversion system according to claim 2, in which said variable capacitor forms a first capacitor (2, 102), the system also comprising a second variable capacitor (4, 104) comprising at least a fixed plate (4.1 ; 104.1) and a mobile plate (4.2 ; 102.2) capable of moving away from the fixed plate, the mobile plates in the first and second capacitors being fixed in movement, the second variable capacitor (4, 104) being connected to the collection means (8) though a transfer switch or diode (16, 116).

8. Conversion system according to claim 7, in which the second capacitor (4) comprises two fixed plates (4.1a, 4.1b) arranged on each side of the mobile plate (4.2).

9. Conversion system according to claim 7, in which each capacitor comprises a fixed plate (102.1, 104.1) and each is arranged on one side of a common mobile plate (102.2).

10. Conversion system according to claim 9, in which the first fixed plate (102.1) of the first capacitor (102) provides a surface facing the mobile plate (102.2) above the surface of the second fixed plate (104.1) of the second capacitor (104).

11. Conversion system according to claim 2, in which closing duration of the discharge switch (18; 118 ; 218) is less than one hundredth of the duration of the conversion cycle.

12. Conversion system according to one of claims 2 to 11, in which the discharge switch (18, 118, 218) is formed of elements supported on the fixed plate and the mobile plate of said variable capacitor (2; 102; 202), the discharge taking place by bringing elements supported on the plates into contact with each other.

13. Conversion system according to one of claims 2 to 11, in which switches are controllable switches as a function of time, the value of the position of a mobile plate, the capacitance of one of the capacitors, the voltage at the terminals of a capacitor or the derivative of the voltage at the terminals of a capacitor.

14. Conversion system according to one of claims 2 to 13, said system being an integrated system made of silicon.

15. Conversion system according to one of claims 2 to 14, in which the return means are chosen from springs, blades and deformable beams.

16. Electrical energy conversion assembly comprising at least two conversion systems according to one of claims 2 to 15, said assembly being capable of converting the first energy at the first voltage into several second energies at several second voltages.

17. Conversion assembly according to claim 16, in which the systems have a common mobile electrode.

18. Electronic device comprising at least one electrical energy conversion system according to any of claims 2 to 15 or a conversion assembly according to claim 16 or 17.

**Patentansprüche**

1. Verfahren zur Umwandlung einer ersten elektrischen Energie bei einer ersten Spannung (Ve) zu einer zweiten elektrischen Energie bei einer zweiten Spannung ($V_s$) durch ein Umwandlungssystem, welches wenigstens eine Spannungsquelle (6) mit der ersten Spannung ($V_e$), die mit einem Kondensator variabler Kapazität (202) vermittels eines Lade-Unterbrechers (212) verbunden ist, einen Entlade-Unterbrecher (18), der parallel zu dem Kondensator variabler Kapazität geschaltet ist, ein Sammel-Mittel (208) für die Energie bei der zweiten Spannung ($V_s$) und Mittel zur Übertragung von Energie (216) zwischen dem Kondensator variabler Kapazität (202) und dem Sammel-Mittel (208) umfasst, wobei der Kondensator variabler Kapazität (202) eine feste Platte und eine mobile Platte umfasst, die dazu geeignet ist, sich von der festen Platte zu entfernen und an diese anzunähern, und elastische Rückstellmittel für die mobile Platte zu ihrer Anfangsposition umfasst, wobei das Verfahren durch folgende Schritte für einen Umwandlungszyklus gekennzeichnet ist:

   a) Schließen des Lade-Unterbrechers (212), wobei der Entlade-Unterbrecher offen ist, um den Kondensator variabler Kapazität (202) bei der ersten Spannung (Ve) aufzuladen und eine Verlagerung der mobilen Platte mit einer Vergrößerung der Kapazität des Kondensators herbeizuführen,
   b) Öffnen des Lade-Unterbrechers (212) und Offen-Halten des Entlade-Unterbrechers (218) um einen Betrieb mit konstanter Ladung des Kondensators zu ermöglichen, wobei die Kapazität des Kondensators (202) fortfährt, zuzunehmen,
   c) Schließen des Entlade-Unterbrechers (218) um ein wenigstens teilweises Entladen des Kondensators variabler Kapazität (202) zu ermöglichen und eine Umkehrung der Bewegung des mobilen Elements zu erzeugen,

   wobei die Mittel zur Übertragung eine Energieübertragung von dem Kondensator zu den Sammel-Mitteln bei der Bewegung der mobilen Elektrode übertragen.

2. System zur Umwandlung einer ersten elektrischen Energie bei einer ersten Spannung ($V_e$) zu einer zweiten elektrische Energie bei einer zweiten Spannung ($V_s$), umfassend wenigstens eine Spannungsquelle (6; 106; 206) mit der ersten Spannung ($V_e$), die mit einem Kondensator variabler Kapazität (2; 102; 202) vermittels eines Lade-Unterbrechers (12; 112; 212) verbunden ist, einen Entlade-Unterbrecher (18; 118; 218), der parallel zu dem Kondensator variabler Kapazität geschaltet ist, ein Sammel-Mittel (8; 108; 208) für die Energie bei der zweiten Spannung ($V_s$) und Mittel zur Übertragung von Energie (4, 16; 104, 116; 216) zwischen dem Kondensator variabler Kapazität (202) und dem Sammel-Mittel (208) wobei der Kondensator variabler Kapazität (202) eine feste Platte, eine mobile Platte, die dazu geeignet ist, sich von der festen Platte zu entfernen und an diese anzunähern und elastische Rückstell-Mittel für die mobile Platte zu ihrer Anfangsposition hin umfasst, wobei das Umwandlungssystem **gekennzeichnet ist durch** Mittel zur Regelung/Steuerung der Lade- und Entlade-Unterbrecher, so dass, für einen Umwandlungszyklus:

a) bei einem ersten Schritt der Entlade-Unterbrecher geöffnet wird und der Lade-Unterbrecher geschlossen wird, was die Ladung des Kondensators mit der ersten Spannung (Ve) sicherstellt, und eine Verlagerung der mobilen Platte mit einer Vergrößerung der Kapazität des Kondensators,
b) bei einem zweiten Schritt der Lade-Unterbrecher geöffnet wird und der Entlade-Unterbrecher offen gehalten wird, was einen Betrieb mit konstanter Ladung des Kondensators ermöglicht, wobei die Kapazität des Kondensators fortfährt, zuzunehmen,
c) bei einem dritten Schritt der Entlade-Unterbrecher geschlossen wird, was ein wenigstens teilweises Entladen des Kondensators variabler Kapazität ermöglicht, was zur einer Umkehr der Bewegung des mobilen Elements führt, wobei die Mittel zur Übertragung eine Energieübertragung von dem Kondensator zur den Sammel-Mitteln bei der Bewegung der mobilen Elektrode sicherstellen,

3. Umwandlungssystem nach Anspruch 2, wobei die Regelung/Steuerung der Unterbrecher derart ist, dass das Schießen des Lade-Unterbrechers (12; 112; 212) stattfindet, wenn die Kapazität des Kondensators (2; 102; 202) minimal ist.

4. Umwandlungssystem nach Anspruch 2, wobei die Regelung/Steuerung der Unterbrecher derart ist, dass das Schließen des Entlade-Unterbrechers (18; 118; 218) stattfindet, wenn die Kapazität des Kondensators (2; 102; 202) maximal ist.

5. Umwandlungssystem nach Anspruch 2, wobei die eine der Elektroden des Kondensators (202.2) vermittels eines Unterbrechers oder einer Transfer-Diode (216) mit dem Sammelmittel (208) verbunden ist.

6. Umwandlungssystem nach Anspruch 5, wobei der Unterbrecher oder die Transfer-Diode (216) bei einer Phase der Bewegung der mobilen Elektrode (202.2) des Kondensators variabler Kapazität, welche einer Verkleinerung seiner Kapazität entspricht, durchlässig sind.

7. System zur Umwandlung von Energie nach Anspruch 2, wobei der Kondensator variabler Kapazität einen ersten Kondensator (2, 102) bildet, wobei das System weiterhin einen zweiten Kondensator variabler Kapazität (4, 104) umfasst, welcher wenigstens eine feste Platte (4.1; 104.1) und eine mobile Platte (4.2; 102.2) umfasst, die geeignet ist, sich von der festen Platte zu entfernen oder an diese anzunähern, wobei die mobilen Platten des ersten und zweiten Kondensators zur gerneinsamen Bewegung ausgebildet sind, wobei der zweite Kondensator variabler Kapazität (4, 104) mit dem Sammel-Mittel (8) vermittels eines Unterbrechers oder einer Transfer-Diode (16, 116) verbunden ist.

8. System zur Umwandlung nach Anspruch 7, wobei der zweite Kondensator (4) zwei feste Platten (4.1a, 4.1b) umfasst, die zu beiden Seiten der mobilen Platte (4.2) angeordnet sind.

9. System zur Umwandlung nach Anspruch 7, wobei jeder Kondensator eine feste Platte (102.1, 104.1) umfasst, die jeweils auf einer Seite von einer gemeinsamen mobilen Platte (102.2) angeordnet ist.

10. System zur Umwandlung nach Anspruch 9, wobei die erste feste Platte (102.1) des ersten Kondensators (102) eine Fläche gegenüber der mobilen Platte (102.2) aufweist, die größer ist als diejenige von der zweiten festen Platte (104.1) des zweiten Kondensators (104).

11. System zur Umwandlung nach Anspruch 2, wobei die Schließdauer des Entlade-Unterbrechers (18; 118; 218) kleiner als ein Hundertstel der Dauer des Umwandlungs-Zyklus ist.

12. System zur Umwandlung nach einem der Absprüche 2 bis 11, wobei der Entlade-Unterbrecher (18, 118, 218) aus Elementen gebildet ist, die von der festen Platte und von der mobilen Platte des Kondensators variabler Kapazität (2; 102; 202) getragen werden, wobei die Entladung stattfindet, indem die von den Platten getragenen Elemente in Kontakt gebracht werden.

**13.** System zur Umwandlung nach einem der Ansprüche 2 bis 11, wobei die Unterbrecher als Funktion der Zeit, des Werts der Postition einer mobilen Platte, des Werts der Kapazität von einem der Kondensatoren, der Spannung an den Klemmen eines Kondensators oder der Ableitung der Spannung an den Klemmen eines Kondensators steuerbare/regelbare Unterbrecher sind.

**14.** System zur Umwandlung nach einem der Ansprüche 2 bis 13, wobei das System ein integriertes System ist, das aus Silizium hergestellt ist.

**15.** System zur Umwandlung nach einem der Ansprüche 2 bis 14, wobei die Rückstellmittel ausgewählt sind aus Federn, Blattfedern, und verformbaren Balken,

**16.** Anordnung zur Umwandlung von elektrischer Energie, welche wenigstens zwei Systeme zur Umwandlung nach einem der Ansprüche 2 bis 15 umfasst, wobei die Anordnung geeignet ist, die erste Energie bei der ersten Spannung in mehrere zweite Energien bei mehreren zweiten Spannungen umzuwandeln.

**17.** Anordnung zur Umwandlung nach Anspruch 16, wobei die Systeme eine gemeinsame bewegliche Elektrode aufweisen.

**18.** Elektronische Vorrichtung, umfassend wenigstens ein System zur Umwandlung von elektrischer Energie nach einem der Ansprüche 2 bis 15 oder eine Anordnung zur Umwandlung nach Anspruch 16 oder 17.

FIG. 1

FIG. 4

FIG. 2C'

FIG. 2A

FIG. 2B

FIG. 2C

FIG. 2D

FIG. 3

FIG. 5A

FIG. 5B

FIG. 5C

FIG. 5D

FIG. 6

EP 2 225 823 B1

FIG. 7

FIG. 7A

FIG. 7B

FIG. 7C

FIG. 7D

**FIG. 8A**

**FIG. 8B**

**FIG. 9**

FIG. 10

FIG. 11

FIG. 12

## RÉFÉRENCES CITÉES DANS LA DESCRIPTION

**Documents brevets cités dans la description**

- US 6317342 B